# EUROPÄISCHE PATENTSCHRIFT

(11) **EP 2 750 954 B1**
(45) Veröffentlichungstag und Bekanntmachung des Hinweises auf die Patenterteilung: **30.10.2019**
(21) Anmeldenummer: 12769014.7
(22) Anmeldetag: 29.09.2012
(51) Int. Cl.: B61K 7/04

(54) **GLEISBREMSE FÜR SCHIENENFAHRZEUGE**
TRACK BRAKE FOR RAIL VEHICLES
FREIN DE VOIE POUR VÉHICULES FERROVIAIRES

(30) Priorität: 07.10.2011 DE 102011115089
(43) Veröffentlichungstag der Anmeldung: 09.07.2014
(73) Patentinhaber: Siemens Mobility GmbH, 81739 München (DE)
(72) Erfinder: QUAST, Holger, 46509 Xanten (DE); MEISENZAHL, Klaus, 47259 Duisburg (DE)
(86) Internationale Anmeldenummer: PCT/EP2012/004118
(87) Internationale Veröffentlichungsnummer: WO 2013/050132

(56) Entgegenhaltungen:
- CH-A5- 634 514
- DE-A1- 3 736 580
- DE-B3-102005 054 832
- FR-A- 991 609
- GB-A- 1 482 999

## Beschreibung

Die Erfindung betrifft eine Gleisbremse für Schienenfahrzeuge.

Eine derartige Gleisbremse ist beispielsweise aus GB 1482999 bekannt. Sie umfasst eine Mehrzahl von länglichen mit Abstand hintereinander auf einem durchgehenden Bremsbalken befestigte Bremsklötze, welche kurz bemessen sind verglichen mit der Länge des Bremsbalkens und wobei die Bremsklötze vermittels einer schwingungsdämpfenden Zwischenlage mit dem Bremsbalken verschraubt sind.

Aus CH 634514 ist es bekannt, Bremsklötze zur Lärmreduktion als Sandwichsegmente auszubilden, wobei zwischen einem Oberteil und einem Unterteil aus Stahl eine Zwischenlage aus einem anderen Werkstoff, z.B. aus Nichteisenmetall, Sintermetall, oder Keramik vorgesehen ist.

DE 10 2005 054 832 B3 beschreibt in Längsrichtung vom Bremsbalken hintereinander befestigte Bremsklötze mit Bremsflächen, die zur verbesserten Geräuschdämpfung in unterschiedlicher Höhe angeordnet sind.

DE 39 30 332 A1 beschreibt Bremsbalken, welche seitlich offene Kammern aufweisen, in denen Bremsklötze in Form vorspringender Verschleißelemente aufgenommen sind, welche aus einem Bremsgeräusche dämpfenden Material bestehen. Die Verschleißelemente sind jeweils in Taschen aus schwingungsdämpfendem Material aufgenommen und darin mittels Bolzen fixiert.

Aus dem Dokument FR 991 609 A ist eine Gleisbremse mit einem Bremsschuh aus hartem Stahl und einen eingelagerten Band aus weichem Stahl bekannt.

Demgegenüber besteht die Aufgabe der vorliegenden Erfindung darin, eine beträchtliche Herabsetzung der Bremsgeräusche, verursacht durch Schwingungen während des Abbremsvorgangs auf eine andere Weise zu erzielen, wobei gleichzeitig eine Erhöhung des Reibbeiwerts und somit eine verbesserte Bremsleistung ermöglicht wird.

Diese Aufgabe wird erfindungsgemäß gelöst durch eine Gleisbremse für Schienenfahrzeuge, welche eine Mehrzahl von länglichen mit Abstand hintereinander auf einem durchgehenden Bremsbalken befestigte Bremsklötze umfasst, wobei die Bremsklötze in Vertiefungen innerhalb ihrer Bremsfläche eingefügte Einsätze aus unter der Bremslast temperaturfestem, Abrieb erzeugendem Werkstoff aufweisen und wobei die Einsätze quer zur Längsrichtung des Bremsbalkens zueinander höhenversetzt angeordnet sind.

Ein wesentlicher Lösungsgedanke betrifft dabei die Wahl des Werkstoffes der Bremsklötze, welche aus Stahl oder Gusseisen mit Kugelgraphitstruktur bestehen können sowie des Werkstoffs der darin eingefügten Einsätze aus einem speziellen unter der Bremslast temperaturfesten, Abrieb erzeugendem Werkstoff. Durch den Abrieb, der aus feinen Abriebpartikeln in Pulverform vorliegt, wird die Schwingung des Schienenrads zusätzlich gedämpft, sodass insbesondere die sehr störenden hochfrequenten Kreischgeräusche minimiert werden. Der beim Bremsen erzeugte Abrieb auf der Bremsfläche der Bremsklötze, während diese gegen die zugeordnete Flanke des Schienenrads angedrückt wird, ergibt sich zudem eine Erhöhung des Reibwerts dieses Bremsvorgangs verbunden mit dem Effekt einer Erhöhung der Bremsleistung bei der erfindungsgemäßen Gleisbremse.

Dadurch, dass die Bremsklötze in an sich bekannter Weise auswechselbar am Bremsbalken befestigt sind, ist ein Austausch verschlissener Bremsklötze ohne großen Zeitaufwand möglich.

Dadurch, dass die Einsätze erfindungsgemäß quer zur Längsrichtung des Bremsbalkens zueinander höhenversetzt angeordnet sind, wird die Geräuschdämpfung noch verbessert, weil dadurch den Schwingungen der Schienenräder in der Radebene noch effektiver entgegen gewirkt wird. Außerdem ist dadurch eine gleichmäßig gute Versorgung der Bremsflächen mit Abriebsmasse gewährleistet.

Nach einer Variante wird vorgeschlagen, dass die Einsätze regelmäßig höhenversetzt, z.B. in Wellen- oder Mäanderform angeordnet sind. Die Verteilung in Wellenform, z.B. in Art von typischen Sinuskurven, hat dabei in der Praxis zu besonders vorteilhaften Ergebnissen geführt.

Eine für die Praxis besonders geeignete Ausführungsform besteht darin, dass die Einsätze aus Sinterkeramik bestehen, wobei sie vorteilhaft in Form zylindrischer Bolzen verarbeitet werden. Geeignete Einsätze können aber auch anders geformt sein.

Zu ihrer Befestigung ist vorgesehen, dass die Einsätze in Sacklochbohrungen oder dergleichen

Vertiefungen innerhalb der Bremsfläche eingepresste Körper sind.

An einem praktischen Ausführungsbeispiel wurden gute Ergebnisse bei der Geräuschdämpfung mittels Bremsbalken von bis zu 10 m Länge bei einer Länge der Bremsklötze zwischen 0,4 und 1,5 m erzielt. Dabei wurden Einsätze aus Sinterkeramik in Form zylindrischer Bolzen im Durchmesserbereich von bis zu 26 mm in die Bremsklötze eingepresst.

Im Folgenden wird ein Ausführungsbeispiel der Erfindung anhand der Zeichnung erläutert. Es zeigen
Fig. 1 eine Gleisbremse mit auf beiden Seiten des Schienenrads angeordneten Bremsbalken, in einem Vertikalschnitt quer zur Schiene,
Fig. 2 eine Draufsicht auf den Abschnitt eines Bremsbalkens und
Fig. 3 einen Bremsbalken in der Seitenansicht auf die Bremsfläche gesehen.

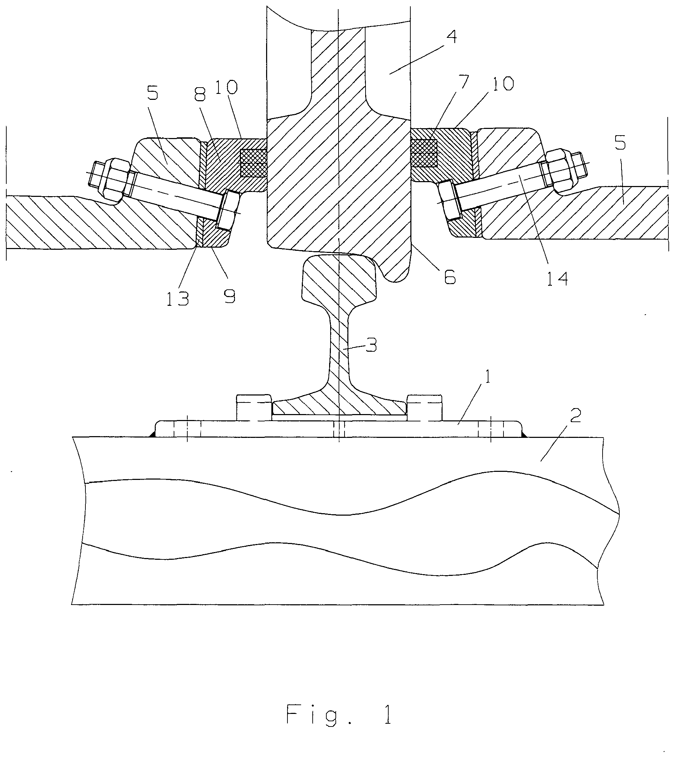

Gemäß Fig. 1 ist auf einer Gleisschwelle 1 eines Gleisbetts 2 eine Schiene 3 befestigt. Auf der Schiene 3 läuft ein Schienenrad 4, gegen dessen Flanke 6 ein Bremsbalken 5 einer Gleisbremse angedrückt wird. Die Andrückmittel, wobei es sich um mechanische Federpakete, hydraulisch oder pneumatisch betätigte Zylinder oder dergleichen handeln kann, sind in der Zeichnung nicht dargestellt.

Auf der dem Schienenrad zugewandten Seite eines Bremsbalkens 5 sind Bremsklötze 10 mittels Schraubbolzen 14 auswechselbar befestigt, wobei zwischen den Bremsklötzen 10 und der zugewandten Seite des Bremsbalkens 5 eine Zwischenlage 13 aus schwingungsdämpfendem Material eingefügt ist.

Die Bremsklötze 10 sind jeweils geschmiedete Formkörper aus Stahl oder Gusskörper mit einem Sockelteil 9, welcher der Befestigung dient und einem darüber angeformten Kragteil 8 in welchen Einsätze in Form zylindrischer Bolzen 7 aus Sinterkeramik eingepresst sind.

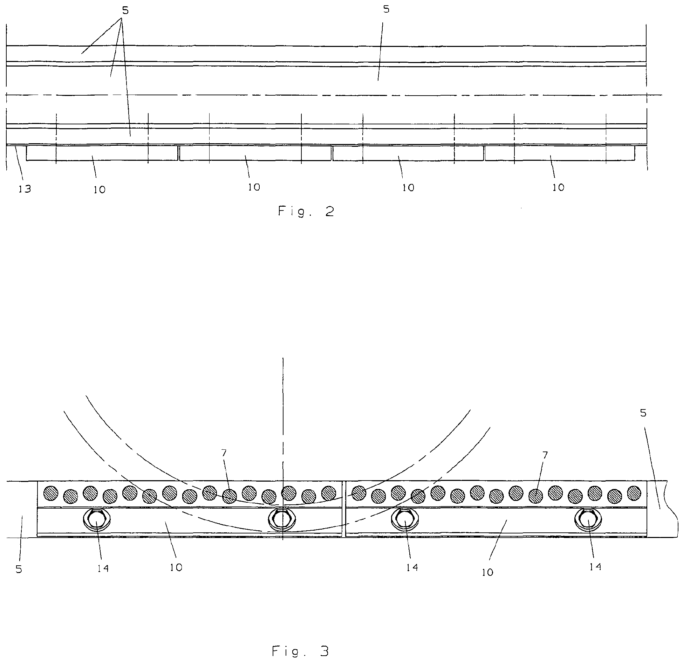

Fig. 2 zeigt eine Draufsicht auf einen Längenabschnitt eines Bremsbalkens 5 mit vier hintereinander angeordneten Bremsklötzen 10, welche über die Zwischenlage 13 aus schwingungsdämpfendem Material mit dem Bremsbalken 5 verschraubt sind.

Fig. 3 zeigt in vergrößerter Darstellung eine Seitenansicht eines Abschnitts eines Bremsbalkens 5 mit zwei hintereinander mittels Schraubbolzen 14 befestigten Bremsklötzen 10 in der Ansicht auf deren Bremsfläche. Diese ist zusammengesetzt aus dem Matrixwerkstoff z.B. in Form eines Gusskörpers aus Kugelgraphit und darin eingepressten zylindrischen Bolzen 7 aus Sinterkeramik. Die Bolzen 7 sind gegeneinander höhenversetzt angeordnet, sodass deren Mittelpunkte eine flache Wellenform beschreiben.

## Patentansprüche

1. Gleisbremse für Schienenfahrzeuge, welche eine Mehrzahl von länglichen mit Abstand hintereinander auf einem durchgehenden Bremsbalken (5) befestigte Bremsklötze (10) umfasst,
wobei die Bremsklötze (10) in Vertiefungen innerhalb ihrer Bremsfläche eingefügte Einsätze aus unter der Bremslast temperaturfestem, Abrieb erzeugendem Werkstoff aufweisen und
wobei die Einsätze quer zur Längsrichtung des Bremsbalkens (5) zueinander höhenversetzt angeordnet sind.

2. Gleisbremse nach Anspruch 1,
**dadurch gekennzeichnet,**
**dass** die Einsätze regelmäßig höhenversetzt sind.

3. Gleisbremse nach Anspruch 2, **dadurch gekennzeichnet,**
**dass** die Einsätze in Wellen- oder Mäanderform angeordnet sind.

4. Gleisbremse nach einem der Ansprüche 1 bis 3, **dadurch gekennzeichnet,**
**dass** die Einsätze aus Sinterkeramik bestehen.

5. Gleisbremse nach einem der Ansprüche 1 bis 4, **dadurch gekennzeichnet,**
**dass** die Einsätze in die sie aufnehmenden Vertiefungen eingepresste Körper sind.

6. Gleisbremse nach einem der Ansprüche 1 bis 5, **dadurch gekennzeichnet,**
**dass** die Einsätze aus in Sacklochbohrungen quer zur Bremsfläche eingepressten zylindrischen Bolzen (7) bestehen.

## Claims

1. Track brake for rail vehicles, which comprises a plurality of elongated brake shoes (10) affixed onto a continuous brake beam (5) and spaced apart one behind another, wherein the brake shoes (10) have inserts, introduced into depressions within their brake surface, which inserts are made of a material which, when subject to the braking load, is thermally stable and produces abraded matter and
wherein the inserts are arranged with height offsets relative to one another at right angles to the longitudinal direction of the brake beam (5)

2. Track brake according to claim 1,
**characterised in that**
the inserts have regular height offsets.

3. Track brake according to claim 2,
**characterised in that**
the inserts are arranged in an undulating or serpentine form.

4. Track brake according to claim 1 to 3,
**characterised in that**
the inserts consist of a sintered ceramic.

5. Track brake according to one of claims 1 to 4,
**characterised in that**
the inserts are solid bodies pressed into the depressions which accommodate them.

6. Track brake according to one of claims 1 to 5,
**characterised in that**
the inserts consist of cylindrical pins (7) pressed into blind holes bored obliquely into the braking surface.

## Revendications

1. Frein de voie pour des véhicules ferroviaires, qui comprend une pluralité de sabots (10) de frein fixés les uns derrière les autres à distance longitudinalement à une poutre (5) de frein continue,
les sabots (10) de frein ayant, insérés dans des cavités au sein de la surface de frein, des inserts en matériau résistant à la température sous la charge de freinage et produisant de l'abrasion et
dans lequel les inserts sont disposés transversalement à la direction longitudinale de la poutre (5) de frein, en étant décalés en hauteur les uns par rapport aux autres.

2. Frein de voie suivant la revendication 1,
**caractérisé**
**en ce que** les inserts sont décalés en hauteur régulièrement.

3. Frein de voie suivant la revendication 2,
**caractérisé**
**en ce que** les inserts sont disposés sous une forme ondulée ou sinueuse.

4. Frein de voie suivant l'une des revendication 1 à 3,
**caractérisé**
**en ce que** les inserts sont en une céramique frittée.

5. Frein de voie suivant l'une des revendications 1 à 4,
**caractérisé**
**en ce que** les inserts sont des pièces enfoncées dans les cavités qui les reçoivent.

6. Frein de voie suivant l'une des revendications 1 à 5,
**caractérisé**
**en ce que** les inserts sont constitués de tenons (7) cylindriques enfoncés dans des trous borgnes transversalement à la surface de frein.
